# EUROPEAN PATENT APPLICATION

(11) **EP 4 763 681 A1**
(43) Date of publication of application: **24.06.2026**
(21) Application number: 24222562.1
(22) Date of filing: 20.12.2024
(51) Int. Cl.: B62M 6/40, B62M 6/65

(54) **VEHICLE DRIVE SYSTEM**

(71) Applicant: E2 Drives, 1300 Wavre (BE)
(72) Inventor: VERLE, Aubain Benoît D, 1300 Wavre (BE); DELEVAL, Arthur Christophe D, 1300 Wavre (BE); DELEVAL, Christophe Stéphan G, 1300 Wavre (BE)
(74) Representative: Calysta NV

(57) **Abstract**

A vehicle drive system comprising: a housing; a continuously variable transmission system; a first electric motor connected to the continuously variable transmission system and a second electric motor connected to the continuously variable transmission system, the first electric motor and the second electric motor being arranged coaxially; and at least a first control unit for controlling the first electric motor and the second electric motor; wherein the first control unit, the first electric motor, and the second electric motor are arranged inside the housing.

## Description

The present invention relates to the field of vehicle drive systems, in particular vehicle drive systems for pedal vehicles such as electrically powered or assisted vehicles, e.g. bicycles.

Electrically powered or assisted bicycles (e-bikes) have become increasingly popular as they offer an environmentally friendly alternative to traditional, pollutant-emitting motor vehicles and provide an efficient alternative to traditional bicycles.

Usually, e-bikes are propelled by human force and by an electric motor that provides additional power only when the rider pedals.

Currently, e-bikes are typically powered by two types of motors: either hub-drive motors or mid-drive motors. Hub motors are located in the wheel hub and provide propulsion directly to the wheel. Mid-drive motors are mounted near the bike's bottom bracket, between the pedals and provide propulsion directly to the crankset.

E-bikes equipped with two electric motors are also known.

For example, US8210974B2 describes a system comprising two motors/generators, where one functions as a generator to transmit electrical power to the other, which functions as a motor.

EP2218635A1 describes a method of operating a pedal cycle having an input electrical machine and an output electrical machine, where one electrical machine is operated as a generator to at least partly power the other electrical machine as a motor.

However, existing systems have several deficiencies, such as suboptimal interaction and control of the two motors.

It is an object of the invention to overcome the disadvantages of the prior art, or at least provide an alternative to the prior art. It is in particular an object of the invention to improve the management of two motors in a dual-motor vehicle drive system.

The preceding discussion of the prior art is intended to facilitate an understanding of the present invention only. The discussion is not an acknowledgement or admission that any of the material referred to is or was part of the common general knowledge as at the priority date of the application.

One or more objects are achieved with a vehicle drive system comprising:
- a housing;
- a continuously variable transmission system;
- a first electric motor connected to the continuously variable transmission system and a second electric motor connected to the continuously variable transmission system, the first electric motor and the second electric motor being arranged coaxially; and
- at least a first control unit for controlling the first electric motor and the second electric motor,
wherein the first control unit, the first electric motor, and the second electric motor are arranged inside the housing.

The invention thus relates, in embodiments, to a vehicle drive system. A vehicle drive system is configured to transmit power to propel a vehicle. Said power may e.g. be provided by the vehicle drive system, and/or received by the vehicle drive system, e.g. at an input body. The vehicle drive system may e.g. be configured to be functionally connected to one or more wheels of the vehicle for driving said wheel into rotation.

By "connected to", it is meant that two elements are connected to each other directly or indirectly, meaning that other elements may be arranged in between the two connected elements.

The vehicle drive system is configured to transmit power to rotate the one or more wheels of the vehicle. The vehicle drive system is configured to transmit power from an input body to an output body.

The terms "input body" and "output body" are to be understood in the sense of an input and an output in a kinematic chain. The input body is preferably a power input, and the output body is preferably a power output. The input body is responsible for receiving power from the power source (e.g. provided by a user), which is in turn transmitted to the output body for propelling the vehicle. The input body may e.g. be connected to a crankset of a bicycle or to an electric motor. The output body may e.g. be connected to a wheel rim of a bicycle.

The vehicle drive system can e.g. be configured to transmit power from a power source such as an electric motor, a human power source, an internal combustion engine, or a combination thereof. The human power source may e.g. be a muscle power of a rider who is pedalling.

The vehicle drive system may comprise at least one motor for providing power (e.g., the first electric motor and/or the second electric motor), but may also be configured to combine several power inputs. For example, the vehicle drive system may be configured to combine a least one human force input and a power input provided by at least one motor. Optionally, the vehicle drive system may be configured to combine power inputs of at least two motors, optionally also with a human power input.

The human power input may e.g. be a muscle power of a rider who is pedalling.

The vehicle can e.g. be a bicycle, a tricycle, a quadricycle, a scooter, a segway, a hoverboard, a one-wheeled scooter. The vehicle can e.g. be a micromobility vehicle. The vehicle comprises at least one wheel for propelling the vehicle. The vehicle can comprise more than one wheel, e.g. two, three, four wheels. The vehicle can e.g. be configured to be propelled by a combination of a human force input and power input provided by at least one motor. The vehicle can e.g. be a (at least partially) human-powered vehicle. The vehicle can e.g. be a (at least partially) muscle powered vehicle. The vehicle is configured to move at least one person and/or cargo.

The vehicle can e.g. be an automotive, a car, a truck, an industrial vehicle, an agricultural vehicle.

The vehicle drive system comprises a housing. The housing is configured to house several components of the vehicle drive system.

The housing allows to protect the components arranged therein from damage caused by weather conditions (e.g., exposure to rain and moisture) or occurring during riding or driving (e.g., impact of debris or rocks, splashing of mud or water).

The housing serves as structural part of the vehicle drive system for supporting components of the vehicle drive system, e.g. bearings, connectors, shafts, and/or the control unit.

At least the first control unit, the first electric motor, and the second electric motor are arranged inside the housing. Optionally, one or more additional components e.g. gearsets and/or sensors are arranged inside the housing.

Nevertheless, it is possible that the vehicle drive system also comprises components outside of the housing.

Optionally, the housing is detachable, i.e., can be separated from the rest of the vehicle. A detachable housing ensures that, in case of failure, the components arranged inside the housing can be easily removed and replaced at once. Alternatively, the housing is an integral part of the vehicle, e.g. part of a wheel.

Optionally, the housing is a multi-part housing, made of two or more parts assembled together.

The housing may be a hub housing configured to be arranged at a wheel of the vehicle, e.g. at a driven wheel of the vehicle. When the vehicle is a bicycle or tricycle, said wheel may e.g. be a rear wheel. The housing may e.g. be the wheel hub. The wheel hub is the component connecting the wheel to the frame (or, when present, to a sway arm or a swing arm) of the vehicle (e.g. the bicycle) through bearings. The wheel hub is arranged at the center of the wheel and is connected to the wheel rim e.g., by spokes, solid discs or other means. The housing may e.g. be configured to be connected to the wheel, e.g. (directly) physically connected. The housing may e.g. be configured to rotate together with the wheel. The housing may e.g. have a longitudinal axis which coincides with a centre axis of the wheel and/or or rotation axis of the wheel (i.e., the housing is in this case coaxial with the wheel).

In embodiments, the housing is a wheel hub housing of a vehicle, e.g., a pedal vehicle, e.g. a bicycle.

The integration of the vehicle drive system in the wheel hub of a pedal vehicle allows to simplify the integration of electric motors into the frame of the vehicle, and reduce the overall size of the vehicle drive system. It also allows to reduce torque on the chain, as the vehicle drive system provides propulsion directly to the wheel.

The integration of the vehicle drive system in the wheel hub of a pedal vehicle also allows to minimize the distance between pedals, when compared for instance to a system integrated in the middle of the pedal vehicle frame (e.g., near or in the bottom bracket of a bicycle). This reduced distance between pedals allows to improve user comfort (more natural feeling during pedalling).

Optionally, the vehicle drive system may comprise a brake disk which can be e.g. connected to the hub housing.

However, the housing may be configured to be arranged in another location of the vehicle. For instance, the housing may be a mid-drive housing configured to be arranged at a central portion of the vehicle, e.g. near the bottom bracket of a bicycle.

Optionally, the housing is made of plastic, aluminum alloy, magnesium alloy, steel, or composite material.

Optionally, the housing is symmetrical or rotationally symmetrical (e.g., the housing is cylindrical). This symmetry allows to simplify the housing construction.

Optionally, the housing comprises heat transfer structures. For example, the housing may comprise cooling fins protruding from an external surface of the housing. This allows to improve the transfer of heat from the housing to the ambient air.

The vehicle drive system further comprises a first electric motor and a second electric motor which are arranged in the housing.

Each of the first electric motor and second electric motor may comprise a rotating component or "rotor" and a stationary component or "stator" (referred to here as the 'first stator' and 'first rotor,' and the 'second stator' and 'second rotor', respectively). By "stationary component" it is herein meant that the component is stationary with respect to the vehicle, in particular a frame of the vehicle.

Each of the first stator and second stator may be configured to generate an electromagnetic field (referred to here as the 'first electromagnetic field' and 'second electromagnetic field', respectively) which rotates relative to said first stator or second stator. For example, each of the first stator and the second stator may comprise one or more iron (or iron alloy) cores with electromagnetic coils such as copper or aluminum coils wounded around the respective iron (or iron alloy) core, and configured to guide electric current for generating the electromagnetic field.

Each of the rotating first electromagnetic field and second electromagnetic field exerts an electromagnetic force on the first rotor and second rotor, respectively. This causes the first or second rotor to rotate relative to the respective stator. Each of the first rotor and second rotor may e.g. comprise one or more permanent magnets. The electromagnetic field may be substantially stationary relative to the respective rotor, e.g. the electromagnetic rotates along with the respective rotor.

The electromagnetic coils may be connected with each other in series or parallel to form winding phases (usually, one, two or three phases). The winding phases may be, in turn, connected with each other e.g. to form a delta configuration or a Y (Wye) configuration (also called star configuration). The connections of the winding phases may be, in turn, brought out from the electric motors for connection with an electric current supply.

Within this text, reference may be made to a longitudinal axis, a longitudinal direction or axial direction, a radial direction, a radial axis, a circumferential direction. Unless explicitly mentioned otherwise, these references will be considered from the viewpoint of the motor. Thus, the longitudinal axis is the longitudinal axis of the first electric motor and second electric motor, and a longitudinal direction or axial direction is parallel to said longitudinal axis. The radial axis and radial direction are radially outward from said longitudinal axis. For example, the radial axis and radial direction lie in a plane that perpendicularly intersects the longitudinal direction. The circumferential direction may be around said longitudinal axis. For example, the circumferential axis and circumferential direction are tangent to a circle centred on the longitudinal axis.

Said longitudinal axis of the motor may be a lateral axis (side-to-side) of the vehicle, and may thus be perpendicular to the longitudinal axis (front-to-back) of the vehicle.

Each of the first and second rotor, when rotating, rotates around a longitudinal axis of the respective first or second electric motor. As mentioned, said longitudinal axis of the electric motors may e.g. be a lateral axis of the vehicle, for example when the housing is arranged at the wheel of the vehicle and the longitudinal axis of the first and second electric motors is parallel to or coincident with the axis of rotation of the wheel, or when the housing arranged near the bottom bracket of a pedal vehicle and the axis of the first and second electric motors is parallel to or coincident with the axis of rotation of a crankset.

The first electric motor and the second electric motor are coaxially arranged in the housing. By "coaxial" it is meant that the longitudinal axis of the first electric motor and the longitudinal axis of the second electric motor are coincident. This longitudinal axis can be the axis of rotation of the first rotor and of the second rotor.

The rotation of the first rotor and/or the second rotor may e.g. be configured to cause the wheel of the vehicle to rotate. This may allow to propel the vehicle. The first rotor and/or the second rotor may thus be configured to be functionally connected to the wheel, e.g. directly, via one or more transmissions, and/or via one or more reductions.

The vehicle drive system further comprises at least a first control unit for controlling the first electric motor and the second electric motor, which is arranged in the housing.

The first control unit may include one or more control sub-units. For example, a single control unit can be configured to control both the first and second electric motor; or a first control sub-unit can be configured to control the first electric motor, and a second control sub-unit can be configured control the second electric motor. In the latter case, both the first and second control sub-unit are arranged in the housing.

The arrangement of the first control unit, the first electric motor and the second electric motor inside the housing allows the first control unit to be close to both electric motors. This allows to reduce the length of wired/wireless connections between the first control unit and said electric motors, ensuring a more efficient transfer of power and/or information. For example, this proximity allows to integrate sensors on the first control unit for obtaining information about the first electric motor and/or the second electric motor which could not be acquired (or which would be less efficiently acquired) by remote sensors, and/or to provide a space for integrating (at least parts of) connections between winding phases on the first control unit.

Moreover, this allows compact dual-motor vehicle drive system. This allows a better integration of the vehicle drive system in the chassis of a vehicle. This is especially beneficial for space-constrained applications (e.g., when the vehicle is a pedal vehicle).

The compact arrangement of the first control unit, the first electric motor and the second electric motor inside the housing also allows to simplify the assembly of the vehicle drive system and reduce costs.

The first control unit may be configured to control the first electric motor and the second electric motor. Controlling the first and second electric motors may include controlling the respective electromagnetic field that the respective stator is configured to generate. As such, the rotation speed or torque of the respective rotor, and eventually the wheel can be controlled. Optionally the control unit is also configured to control a gear ratio between the input body and the output body. Controlling may also include providing or receiving electric power (e.g. electric current) to the respective active body. The first control unit may functionally be connected to the first electric motor and the second electric motor to transfer electrical power and/or information.

In embodiments and/or some modes of working, the ratio (e.g. of respective rotation speeds relative to the non-rotating body) between the input body and the output body and/or wheel is continuously adapted. For example, the control unit may be configured to control the gear ratio accordingly. The objective could be to maintain reference pedalling speed.

In embodiments and/or some modes of working, the ratio (e.g. of respective rotation speeds relative to the non-rotating body) between the input body and the output body is selectable by the user or by software (e.g. a control unit) amongst a set of (discrete) predefined ratio values. For example, the control unit may be configured to control the gear ratio accordingly. It this case, the stepped ratio change are emulated as the selected ratio values are virtual gear ratios.

In embodiments and/or some modes of working, the ratio (e.g. of respective rotation speeds relative to the non-rotating body - e.g. between the input body and the output body) is continuously the minimum ratio. For example, the control unit may be configured to control the gear ratio accordingly. This may e.g. be advantageous for climbing steep hills.

In embodiments and/or some modes of working, the control unit is configured to determine and/or control a torque of the second motor torque in order to maintain a predefined level of assistance (ratio between input power and output power).

In embodiments and/or some modes of working, the drive unit is configured to apply a torque at the output body even if essentially no power is received at the input body from the user. This may e.g. allow the user to move the vehicle with little effort, e.g. when walking with a bicycle.

In embodiments and/or some modes of working, the drive unit is configured to apply a negative (braking) torque at the output body. In this case, the drive unit is configured to absorb kinematics energy. The drive unit may e.g. be configured to provide the recovered energy to a battery, e.g. for storing said recovered energy.

The output body in the embodiments above, may e.g. correspond to the hub housing and/or to a gear of the transmissions that is (directly or indirectly) connected to the hub housing.

Examples of control strategies for controlling the first electric motor and the second electric motor, e.g. to implement a CVT, are known from the following patent applications by the present applicant: US patent applications US 14/397,460, US 15/507,448, US 16/643,088, US 17/634,754, and from the Belgian patent applications BE2023/5641 and BE2024/5329. These applications are incorporated herein by reference in their entirety.

In embodiments, the first rotor and/or the second rotor is arranged radially outward of the respective first stator and/or second stator. In these embodiments, at least one of the first electric motor and the second electric motor is an outrunner electric motor.

Having the first electric motor and/or the second electric motor configured as an outrunner motor allows to improve torque density.

Having the first electric motor and/or the second electric motor configured as an outrunner motor also has the advantage of allowing for better heat dissipation via the airflow generated around the external rotor surface while the rotor is rotating.

In embodiments, the first electric motor and the second electric motor are sequentially and coaxially arranged along a longitudinal direction. In these embodiments, the first electric motor is spaced apart from (i.e., do not overlap with) the second electric motor along the longitudinal direction.

In embodiments, the first electric motor is coaxially arranged radially outward of the second electric motor, or vice-versa. In these embodiments, the first electric motor and the second electric motor at least partially overlap in the longitudinal direction. The first electric motor at least partially surrounds the second electric motor, or vice-versa (e.g., they are concentric).

In embodiments, each of the first electric motor and the second electric motor may be arranged on a shaft which is arranged inside the housing and extending along the longitudinal direction. The first electric motor and the second electric may be arranged on a common shaft. The shaft may be rotationally symmetric e.g., cylindrical.

Optionally, the shaft is configured to remain stationary relative to the longitudinal axis of the motor. The shaft may e.g. be configured to be connected to a frame of the vehicle.

Optionally, the housing shaft is configured to rotate around the longitudinal axis of the motor. The shaft may e.g. be configured to support one or more rotating parts of the motor.

For example, the housing shaft may be a hub shaft.

In embodiments, the first rotor and the second rotor; and/or the first stator and the second stator:
- have the same diameter; and/or
- have the same length; and/or
- have the same cross-section; and/or
- are both made of a stack of laminations, preferably by a stack of stamped iron laminations, wherein the lamination e.g. are identical, or at least have the same thickness and/or shape and/or diameter.

This has the advantage of simplifying the manufacturing and assembly process as well as maintenance, as motors perform and wear similarly over their lifespan. In addition, the same or similar spare parts can be used for both motors.

By "length" of the first rotor and/or the second rotor (also called axial length), it is meant the length along the longitudinal axis of the corresponding first electric motor and/or second electric motor.

Furthermore, having a stack of stamped iron laminations which are identical, or at least have the same thickness and/or shape and/or diameter has the advantage of enabling the use of common manufacturing tools to manufacture the laminations. This allows to increase production volume, and ultimately reduces costs.

For example, when the first electric motor and the second electric motor are made of a stack of laminations, laminations can e.g. be manufactured by stamping sheets of iron or steel having the same thickness and shape. The same shape may e.g. relate to the same length and the same width. The stamped laminations are stacked together (e.g., by mechanical fasteners, welding, or adhesive) to form the cores of the first stator and second stator, and/or the first rotor and second rotor.

Each of the first electric motor and the second electric may e.g. be a brushed DC motor, a brushless DC motor, a permanent magnet synchronous motor (e.g., an internal permanent magnet motor), a reluctance motor, a synchronous AC motor, a stepper motor, an induction motor, an axial flux type motors, a slotless type motors, or any other type of electric motor

In embodiments, the first electric motor and/or the second electric motor is a permanent magnets synchronous motor. These motors ensure higher efficiency and performances.

In embodiments, the vehicle drive system comprises an input body configured to rotate at an input speed, wherein the input body is configured to be rotated directly or via one or more transmissions by a human force input. Optionally, the vehicle drive system is configured to combine the rotation of the input body and at least the rotation of the first electric motor and/or of the second electric motor to propel the vehicle.

In these embodiments, the vehicle is thus a (at least partially) human-powered vehicle or a (at least partially) muscle-powered vehicle. The vehicle can e.g. be an electrically assisted vehicle, bicycle or scooter.

However, in some embodiments, the vehicle drive system does not require a human force input to be received by the input body to propel the vehicle. For example, the vehicle drive system may be configured to propel the vehicle using the first electric motor and/or the second electric motor without requiring any human power (e.g. providing a so-called walk-assist function, or a throttle assist function).

A user of the vehicle, being a human, can provide the human force input, e.g. using pedals of the bicycle to rotate a crankshaft. The human force input rotates the input body. This may be directly in some cases, e.g., when the input body is (or is directly connected to) a crankshaft of a bicycle (i.e., the vehicle drive system is a mid-drive vehicle drive system).

In other cases, one or more upstream transmissions may be arranged between the human force input and the input body of the vehicle drive system. Said upstream transmissions may e.g. include gears to adapt the rotation speed. Said transmissions may e.g. include a chain or belt to convert the movement to the vehicle drive system, e.g. when the input body is arranged in the hub housing at the wheel while the human force input is provided at a distance of the wheel, e.g. at the crankshaft of the bicycle (i.e. the vehicle drive system is a hub-drive vehicle drive system).

In some operation modes, the vehicle drive system is configured to transmit power from an input body to an output body which is functionally connected to a wheel to propel the vehicle.

This may be directly in some cases, e.g., when the output body is (or is directly connected to) a wheel rim (as in hub-drive vehicle drive system).

In other cases, one or more downstream transmissions may be arranged between the output body of the vehicle drive system and one or more wheels of the vehicle. Said downstream transmissions may e.g. include a chain or a belt or a shaft to convert the movement from the vehicle drive system, e.g. when the output body is arranged in the housing at a distance of the wheel, e.g. at the crankshaft of the bicycle (as in mid-drive vehicle drive system).

Optionally, the vehicle drive system is configured to combine the human force input and the input of the first motor (and optionally the second motor) to propel the vehicle.

The vehicle drive system further comprises a continuously variable transmission system (CVT), which is arranged in the housing.

The CVT has an adaptable gear ratio between an input speed and an output speed, e.g. a wheel rotation speed when the vehicle drive system is a hub-drive vehicle drive system. Said gear ratio can e.g. be continuously adapted above a predefined minimum gear ratio, or, in some operational modes, within a gear ratio range between a minimal gear ratio and a maximal gear ratio. The input speed can be the rotation speed of the input body. The input speed is determined by the human force input. In the case of a bicycle, the input speed is determined by the rotation speed at which the user moves the pedals. Thus, there ratio between the human input (e.g. pedal rotation speed) and the wheel rotation speed is continuously adaptable in these embodiments. This provides a pleasant and smooth user experience, optimizing the efficiency of the human power transfer from the human muscles to the wheel.

In embodiments, the CVT comprises a differential system. The differential system (e.g. at a first connection point) is functionally connected to the input body. The differential system (e.g. at a second connection point) is functionally connected to the first electric motor, e.g. to the first rotor. The differential system (e.g. at a third connection point) is functionally connected to the output body, which may be for example the housing.

In embodiments, the drive unit further comprises a differential system, wherein the first electric motor, e.g. the first rotor is functionally (directly) connected to the differential system, and optionally comprising a reduction system, wherein the second electric motor, e.g. the second rotor is functionally (directly) connected to the reduction system.

For example, the differential system (in any of the embodiments described herein) and/or the reduction system (in any of the embodiments described herein) can comprise one or more of the following drive systems: an epicyclic gear/drive; an epicyclic gear/drive with double planet; a cycloidal drive; a harmonic drive; a differential system made of the combination of the above-mentioned differential systems. For example, the differential system and/or reduction system may comprise or be a wolfram transmission.

For example, the differential system may comprise a first gearset and the reduction system may comprise a second gearset, wherein the first electric motor and the second electric motor are respectively connected to the first gearset and the second gearset. For example, the first electric motor, the first control unit, and the second electric motor may be positioned between the first gearset and the second gearset when seen in the longitudinal direction.

When a reduction system is present, the differential system and the reduction system may comprise the same type of gear/drives (e.g., both are epicyclic, also called planetary, gearsets). However, in some cases, the gear/drives of the differential system and the gear/drives of the reduction system may be of different types.

For example, the differential system and/or the reduction system may comprise an epicyclic gearset comprising a sun gear, at least one planet gear, a planet carrier for holding the at least one planet gear, and a ring gear (also called annular gear). In this case, the at least one planet gear may be meshed to the ring gear (e.g., via internal teeth provided on the ring gear) and to the sun gear.

Optionally, each of the differential system and the reduction system comprise a respective epicyclic gearset. In this case, the sun gear of the differential system (also called first sun gear) and the sun gear of the reduction system (also called second sun gear) may be arranged to rotate around a respective axis of rotation, e.g. the first sun gear and the second sun gear may be coaxially arranged to rotate around the same axis of rotation.

Optionally, each of the input body and output body may be connected to, or be integral with, the sun gear, the at least one planet gear, the planet carrier, or the ring gear of the first epicyclic gearset and/or of the second epicyclic gearset.

In embodiments, the vehicle drive system further comprises a freewheel and/or a clutch, wherein the freewheel and/or clutch is functionally connected to an input body (e.g. at a first connection point) and to the housing (e.g. at a second connection point). This embodiment advantageously ensures, when the housing is a rotating housing, that the housing rotation speed is equal or larger than an input body rotation speed. The freewheel and/or clutch is e.g. configured to ensure a minimum gear ratio of the drive unit.

For example, the freewheel may be functionally connected to one of the gears of the first and/or second epicyclic gearset e.g. the freewheel may be arranged between the first planet carrier and/or the second planet carrier and the housing in the radial direction, or between the first ring gear and the housing, or between the second ring gear and the housing, or between any two gear stages (e.g. between any two of : the sun gear, the planet carrier, the ring gear) of the first epicyclic gearset or of the second epicyclic gearset. For example, the freewheel may be arranged between a shaft of the first electric motor or second electric motor and a stationary shaft of the vehicle drive system. The arrangement of the freewheel may be selected based on a target minimum gear ratio.

In embodiments, the first electric motor, the first control unit, and the second electric motor are arranged adjacent to each other in the longitudinal direction inside the housing.

In this case, since there are no additional components arranged between the first electric motor, the first control unit, and the second electric motor, the overall size of the vehicle drive system is further reduced.

In embodiments, the first control unit is configured to control both the first electric motor and the second electric motor.

In embodiments, the first control unit may be fixed to the vehicle's chassis and/or to the housing of the vehicle drive system.

Optionally, the control unit may be physically attached to the housing, e.g. directly or via a frame part for supporting the control unit. Connections may be made with any suitable method, e.g. being pressed into, circled, crimped welded, screwed, bolted, glued. Preferably, when an intermediate component such as a frame part is present between the hub housing and the control unit, said intermediate component is made of a material with high thermal conductivity.

In embodiments, the first control unit may be rotatable. For example, the first control unit may be rotatably mounted around a spindle in the housing. For example, the first control unit and at least one of the first electric motor or the second electric motor may be rotatably mounted around the same spindle in the housing. For example, the first control unit may be fixed to an inner surface of the housing and configured to rotate together with the housing at the housing rotation speed. In this case, the heat dissipation is more efficient.

Having a rotatable first control unit that rotates together with the electric motor that is controlled by the first control unit advantageously allows to integrate, on the first control unit, sensors that require no relative movement between the sensor and the sensed object, for receiving information about the first and/or second electric motor.

In embodiments, the first control unit may have a rotational symmetry, e.g. it may have an annular shape or a disc shape. This ensures symmetrical mass distribution around the centre of symmetry thus it is advantageous when the first control unit is rotatable.

In embodiments, the first electric motor, the first control unit, and the second electric motor may be sequentially arranged along the longitudinal direction, e.g. they can be coaxial. When they are coaxial, a center of the first control unit lies on the longitudinal axis of the first electric motor and the second electric motor.

In embodiments, the first control unit comprises a first surface facing at least the first electric motor.

For example, in these embodiments, the first control unit, the first electric motor and the second electric motor may be sequentially, and optionally coaxially, and optionally adjacent to each other, arranged along the longitudinal direction.

Having a first surface of the first control unit facing at least the first electric motor allows to improve the control of said first electric motor, e.g. by allowing to integrate connections of the winding phases and/or sensors on the first surface.

In embodiments, the first control unit comprises a first surface that faces both the first electric motor and the second electric motor. For example, in these embodiments, the first electric motor may be arranged radially outward of (i.e. surrounding) the second electric motor (or vice-versa), and the first surface of the control unit extends such that it faces both electric motors.

In embodiments, the first control unit is arranged between the first electric motor and the second electric motor when seen in their longitudinal direction.

In embodiments, the first control unit comprises a first surface facing the first electric motor, and a second surface facing the second electric motor. For example, the second surface is opposite to the first surface, e.g. the first and second surfaces correspond to top layer and the bottom layer of a circuit board, respectively.

Having a control unit that at least partially faces both the first electric motor and the second electric motor (whether it is via the same first surface, or via a first surface and a second surface, respectively) allows to improve the control of both electric motors, for the above reasons.

In embodiments, the first electric motor, the first control unit, and the second electric motor are adjacent to each other. By "adjacent" it is meant that these components are not separated by any other components, but at least partially faces each other directly. The adjacent configuration is particularly advantageous for monitoring the angular position of the first and/or second rotor with high precision. For example, the first control unit can integrate magnetic sensors that detect the angular position of the facing rotor e.g. by interacting with (permanent) magnets on the rotor itself, or by sensing the magnetic field on the inner part of the rotor. Detecting the angular position of the rotor by sensing the magnetic field on the inner part of the facing rotor, without relying on targets such as magnets on the rotor, allows to reduce complexity and to determine the true zero position of the rotor with higher accuracy, removing the need for frequent calibrations.

The adjacent configuration also facilitates the connections between winding phase connections that may be integrated on the first control unit and the motor windings of the electric motors.

In embodiments, the first electric motor and the second electric motor are arranged essentially symmetrically with respect to the first control unit.

In embodiments, at least one sensor is arranged on the first control unit for determining an angular position of the first electric motor; an angular position of the second electric motor; a rotation speed of the first electric motor; and/or a rotation speed of the second electric motor.

For example, the first control unit may comprise a Hall effect sensor or more than one Hall effect sensor (e.g., two or three or more Hall effect sensors per rotor). The Hall effect sensor can detect magnetic field of the first electric motor and/or the second electric motor. For example, the Hall effect sensor can detect variations of the magnetic field due to the rotation of the first and/or second rotor. The first control unit may be configured to determine a motor status (e.g., determine a rotation speed of the first rotor) based on said magnetic field variations.

For example, the first control unit may comprise an inductive sensor, a magnetic sensor, an optical sensor, and/or a capacitive sensor.

In these examples, the one or more sensors may be configured to generate a signal, the first control unit is configured to receive this signal, and to determine an angular position and/or a rotational speed of the first electric motor and/or of the second electric motor speed based on this signal. The first control unit may also be configured to determine a vehicle's speed based on the signal received from the one or more sensors, e.g. based on a relationship between the rotational speed of the second motor and a speed of a wheel.

In embodiments, the housing is configured to rotate (e.g., it is a wheel hub housing of a pedal vehicle) and at least one sensor is arranged on the first control unit for determining a rotation speed of the housing.

In embodiments, the first control unit is or comprises a board, e.g. a (assembled) printed circuit board (PCB).

In embodiments, the first control unit comprises more than one printed circuit board (PCB). In this case, at least a first PCB is arranged in the housing according to any of the embodiments described herein, and the other one or more PCBs may also be arranged in the housing or external to the housing.

For example, the first control unit may comprise a first PCB and a second PCB. The first PCB may comprise connections to the first electric motor and the second PCB may comprise connections to the second electric motor.

When more than one PCBs are arranged in the housing, each PCB may be arranged according to any one of the embodiments described herein.

In embodiments, the first control unit is a multi-layered PCB.

A multi-layered PCB advantageously allows to provide a large area available for circuitry within a confined space. Thus, it is possible to have e.g. a large number of connections within a confined volume. Also, at least part of the connections of the first and second electric motor winding can be routed internally within the layers of the PCB, thereby reducing the number of external wire connections, thus reducing the volume of the system.

In embodiments, the control unit is configured to control the first electric motor and the second electric motor. Controlling the first electric motor and/or the second electric motor may include e.g. determining a voltage for each winding phase, for example by using PWM (Pulse Width Modulation) with MOSFET bridges, and applying the determined voltage to each to each motor winding phase. The control unit may further be configured to adjust the applied voltage based on a target current in the first electric motor and/or second electric motor, and/or based on a target rotational speed of the first electric motor and/or second electric motor.

For example, the first control unit may be configured to control the first and second electric motors to achieve a target rotational speed and/or a target torque of the first electric motor and/or the second electric motor.

For example, the first control unit may be configured to control the first and second electric motors to achieve an angular position and/or a rotational speed of the first electric motor and/or the second electric motor.

The first control unit may e.g. be configured to receive information inputs. An information input may e.g. be generated by a user-controlled element, e.g. a gear ratio setting, e.g. at a steering wheel or handlebar of the vehicle; a throttle input, a reference cadence, an assistance ratio, or a brake input. An information input may e.g. be generated by a sensor, e.g. for measuring a position, a speed, and/or an acceleration of an element in the kinematic chain, e.g. a rotation speed, e.g. of a wheel, a crankshaft, an input body, the housing, the first rotor, the second rotor. The one or more sensors generating said information input may be located inside the housing (e.g., arranged on the control unit itself) or external to the housing (e.g., on a vehicle's wheel).

In this case, the first control unit may be configured to control the first electric motor and the second electric motor based on the received information input, e.g., based on a rotational speed of the vehicle's pedals ("speed control") or based on the force applied to the vehicle's pedals ("torque control").

For example, the first control unit may be configured to receive an information input from a sensor, e.g. a Hall effect sensor or an inductive sensor, and determine the parameters of the electric current to be supplied to the first electric motor and the second electric motor based on said signal. However, the first control unit may also be configured to control the first electric motor and the second electric motor based on a sensorless technique i.e., which does not rely on position or speed sensors measurements.

For example, the first control unit may be configured to receive an information input relating to a target level of assistance and, optionally, to control the first and second electric motors based on said target level of assistance.

The target level of assistance can e.g. be an external command received by the first control unit (e.g., a target level of pedal assistance inputted by a user). However, the target level of assistance may also be determined by the control unit, for example based on measurements received from one or more sensors.

The first control unit may e.g. be configured to control the first electric motor and the second electric motor using different control strategies (e.g., the first electric motor is speed-controlled while the second electric motor is torque-controlled) or the same control strategy for both electric motors.

The first control unit may e.g. be configured to control the first electric motor and/or the second electric motor based on a combination of two or more control strategies described herein.

Controlling the first electric motor and/or the second electric motor may include determining a braking force and, optionally, applying the determined braking force to the first electric motor and/or the second electric motor.

The control unit may be configured to be connected to a power supply.

In embodiments, the vehicle drive system further comprises at least one electrical connection to transfer electrical power and/or information between the control unit and the first electric motor and/or the second electric motor. Optionally, the electrical connection is a rotating electrical connection. Optionally, the vehicle drive system comprises a first (rotating) electrical connection to transfer electrical power (e.g., between the control unit and the first electric motor and/or the second electric motor or between an external power cable and the electric motor), and a second (rotating) electrical connection to transfer information.ln embodiments, the vehicle drive system comprises a second control unit, wherein the first control unit (e.g., a first PCB) is configured to control the first electric motor and the second control unit (e.g., a second PCB) is configured to control the second electric motor.

In embodiments, the second control unit is arranged inside the housing.

Within this text, the terms "control unit" and "first control unit" are used interchangeably. In cases where two or more control units are present, the second control unit (or any additional control units) may be configured similarly to the control unit or first control unit according to any of the embodiments of the present description (e.g., the second control unit is also arranged in the housing). For the sake of clarity and brevity, the description of these similar aspects will not be repeated here.

Each of the first electric motor and the second electric motor may comprise winding phases.

In embodiments, the winding phases are connected with each other via winding phases connections that are at least partially located on a circuit board of the first control unit (and/or on a circuit board of the second control unit when a second control unit is present).

Controlling the first electric motor and/or the second electric motor may include controlling the electric current through each winding phases connection. For example, the first control unit may be configured to synchronize the electric currents through the winding phases connections and/or to modulate voltage waveforms applied to these connections by means of a bridge circuit, e.g. by controlling the sequential opening and closing of transistors or switches of the bridge circuit, which may also be integrated in the first control unit. Proper synchronization of these electric currents and control of the waveform allows to generate a rotating electromagnetic field needed for efficient operation of the first and/or second electric motors.

When the winding phases connections are at least partially located on the circuit board of the first control unit, the volume of wire harnesses is reduced because it is possible to reduce or remove wires connecting the winding phases to each other.

In embodiments, the vehicle drive system may comprise at least one fluid space in the housing. The fluid space is configured to guide a fluid flow. The fluid may e.g. be a gas, e.g. air. This has the advantage of allowing for better dissipation of heat from the components that generate most heat (e.g., the electric motors and the control unit) to the fluid in the fluid space, e.g., by natural or forced convection.

The risk of overheating is thus reduced. This is particularly advantageous when the vehicle drive system is in the wheel hub of a bicycle, since hub motors in bicycles are prone to overheating and heat damage, especially during high-demand activities e.g., riding on steep slopes.

In embodiments, the vehicle drive system comprises fluid spaces configured to guide a fluid flow between the first electric motor and/or the second electric motor and the housing, and between the first electric motor and/or the second electric motor and the control unit, the fluid spaces being in fluid communication thereby providing a fluid circulation system within the vehicle drive system.

The fluid circulation system allows to dissipate heat from the components that generate most heat towards the housing.

For example, the fluid spaces between the first electric motor and/or the second electric motor and the housing, and between the first electric motor and/or the second electric motor and the control unit, may be in fluid communication via additional fluid spaces. These additional fluid spaces may be present, for example, between the first electric motor and/or the second electric motor and the continuously variable transmission system.

In embodiments, the fluid spaces of the fluid circulation system comprise at least one of:
- a first fluid space between the first rotor and/or the second rotor, an inner surface of the housing, and the first control unit;
- a second fluid space between the first electric motor and the control unit; and/or between the second electric motor and the control unit;
- a third fluid space between the first electric motor and the continuously variable transmission system, and/or between the second electric motor and the continuously variable transmission system;
- a fourth fluid space in the first stator and/or in the second stator.

In embodiments, the vehicle drive system comprises at least one rotating surface facing at least one of the fluid spaces, wherein the rotating surface is configured to rotate along with the first rotor and/or the second rotor during use, wherein the rotating surface comprises aerodynamic structures and/or the rotating surface is patterned.

The first electric motor and/or the second electric motor may be an outrunner electric motor.

In embodiments where at least one of the first electric motor and the second electric motor is an outrunner electric motor, heat dissipation may further be improved via a fluid flow (e.g., airflow) generated between an external surface of the rotor and an inner surface of the housing by the rotation of the rotor.

This inner surface of the housing may be a surface that extends circumferentially around the longitudinal axis, facing radially inward (e.g., if the housing defines a cylindrical cavity, this surface corresponds to the lateral surface around the cavity).

In embodiments, the rotor may be spaced in radial direction from the inner surface of the housing, and a first fluid space is present between the rotor, the inner surface of the housing and the control unit.

For example, when the first electric motor is arranged radially outward of the second electric motor, the first fluid space is present between the first rotor, the inner surface of the housing and the control unit.

For example, when the first electric motor and the second electric motor are sequentially arranged along the longitudinal direction, the first fluid space may be present between the first rotor, the inner surface of the housing and the control unit, and a further first fluid space may be present between the second rotor, the inner surface of the housing and the control unit.

In these embodiments, the rotor is configured to generate a fluid flow within the first fluid space when rotating.

In embodiments, the first electric motor and/or the second electric motors are spaced in the longitudinal direction from the control unit and a second fluid space is present between the first electric motor and the control unit, and/or between the second electric motor and the control unit.

For example, when both the first electric motor and the second electric motor are spaced in the longitudinal direction from the control unit, a second fluid space may be present between the first electric motor and the control unit, and a further second fluid space may be present between the second electric motor and the control unit.

In these embodiments, the rotation of the rotor forces a fluid flow within the second fluid space.

In embodiments, the first fluid space is in fluid communication with the second fluid space.

In embodiments, the communicating fluid spaces provide a fluid flow path through which fluid, e.g. air, can (re)circulate.

In some operational modes, the air can (re)circulate from the rotor extremity facing away from the control unit through the first fluid space towards a radial outer region of the control unit, then through the second fluid space towards a radial inner region of the control unit, then again towards the rotor extremity facing away from the control unit (e.g., passing through holes or conduits running through the interior of the shaft).

The stator generates the most heat in the system. By (re)circulating air from the rotor extremity, which is cooler than the stator, to the control unit, the system can effectively dissipate heat away from the control unit.

In some operational modes, the air can (re)circulate from a radial inner region of the control unit through the second fluid space towards a radial outer region of the control unit, then through the first fluid space towards the rotor extremity facing away from the control unit, then again towards the radial inner region of the control unit (e.g., passing through holes or conduits running through the interior of the shaft). This fluid flow direction is particularly advantageous in embodiments where the rotor is connected to a differential system or a reduction system containing heat-sensitive components, e.g. gears comprising polymers.

In embodiments, the first electric motor and/or the second electric motor are spaced in the longitudinal direction from the continuously variable transmission system. For example, one of the first electric motor or the second electric may be spaced from a differential system, and the other one of the first electric motor or the second electric may be spaced from a reduction system.

In these embodiments, a third fluid space may be present between the first electric motor and/or the second electric motor and the continuously variable transmission system.

The third fluid space allows the fluid to (re)circulate on the rotor extremity facing away from the control unit, from a radial outer region of the rotor extremity towards a radial inner region of the rotor extremity, or in the opposite direction.

In embodiments, the third fluid space is in fluid communication with the first fluid space.

In embodiments, a fourth fluid space is present in the first stator and/or the second stator.

For example, the first stator and/or the second stator may comprise holes configured to guide a fluid flow. This allows the fluid to (re)circulate from the radial inner region of the control unit through the holes in the first stator and/or second stator towards the extremity of the respective first rotor and/or second rotor facing away from the control unit, or in the opposite fluid flow direction.

For example, the fourth fluid space may be present between the coils of the first stator and/or the second stator. This allows the fluid to (re)circulate from the radial inner region of the control unit through the space between the coils of the first stator and/or the second stator towards the extremity of the respective first rotor and/or second rotor facing away from the control unit, or in the opposite fluid flow direction.

In embodiments, the fourth fluid space is in fluid communication with the third fluid space.

In embodiments, the vehicle drive system comprises fluid spaces configured for a closed-loop circulation of fluid. For example, the closed-loop circulation may occur as the fluid flows from the first fluid space to the second fluid space, to the third fluid space, and then back to the first fluid space through the fourth fluid space (e.g. through holes in the stator), without fluid entering or exiting the loop.

In embodiments, the vehicle drive system comprises fluid spaces configured for an open-loop circulation of fluid. In this case, the vehicle drive system can e.g. comprise an inlet and/or outlet enabling a fluid (e.g. air from the environment) to enter or exit the loop.

The fluid can be a gas, e.g. air.

Even though the first and second fluid spaces are herein described in the context of a dual motor vehicle drive system, these embodiments are equally applicable to a vehicle drive system comprising only the first electric motor.

The fluid flow direction in the fluid spaces (e.g. longitudinally from or towards the control unit in the first fluid space and/or in the fourth fluid space, and radially inward or outward in the second fluid space and/or in the third fluid space) can depend on the direction of rotation of the rotor and/or the presence of aerodynamic structures on the external surface of the rotor.

In embodiments, the vehicle drive system comprises aerodynamic structures, patterns, which can be arranged on one or more rotating components of the vehicle drive system (e.g. on an external surface of the first rotor and/or second rotor, on an inner surface of the housing, on an external surface of a drum or flange of the first rotor and/or second rotor).

Optionally, the aerodynamic structures, and/or patterns may be arranged on a rotating component that faces a fluid space according to any of the embodiments described herein. This allows to synergistically improve the dissipation of heat, via the interaction of the aerodynamic structures or patterns with the fluid in the fluid space during rotation.

By "aerodynamic structure" it is meant a structure (e.g., fins, blades, fans) configured to generate and/or direct a fluid flow when said structure moves.

By "pattern" it is meant a repeated arrangement of microstructures (e.g., ribs, protrusions, holes, or grooves).

In embodiments, the vehicle drive system comprises heat transfer structures, which can be arranged on one or more components of the vehicle drive system.

The heat transfer structures may be arranged on rotating components and/or on non-rotating components.

Optionally, the heat transfer structures may be arranged on a component that faces a fluid space according to any of the embodiments described herein. This allows to synergistically improve the dissipation of heat.

By "heat dissipation structure" it is meant a structure (e.g., cooling fins) configured to increase the surface area available for heat exchange with a surrounding cooling medium, e.g. air.

In embodiments, the first rotor and/or the second rotor has an external surface that comprises aerodynamic structures and/or that is patterned.

For example, the first rotor and/or the second rotor may comprise fins, blades or fans extend radially outward from the external surface of the rotor and forming a deflection angle relative to the rotor axis.

For example, the first rotor and/or the second rotor has an external surface that comprises holes. The holes may be drilled in the external surface at an inclination angle to form a deflection angle relative to the rotor axis. These inclined drilled holes can e.g. define fans by directing fluid flow in a specific direction when the rotor is rotating.

In embodiments where the first electric motor and/or the second electric motor is an outrunner motor, a flange or a drum may be provided radially outward of the first rotor and/or second rotor. For example, the flange or drum may be configured to connect a shaft of the motor to the core of the respective stator. In these embodiments, holes may be drilled in the external surface of the drum or flange at an inclination angle to form a deflection angle relative to the rotor axis.

In embodiments, the external surface of the first rotor and/or the second rotor comprises heat transfer structures such as fins and/or grooves.

Advantageously, when these structures rotate driven by the rotation of the rotor, thermal energy transfer from the rotor to the surroundings (e.g. air in the first fluid space) is facilitated.

Aerodynamic structures allow to generate and/or direct fluid flow in a predetermined direction e.g. towards and/or away from the components most sensitive to heat damage, particularly the control unit and/or stator. This is particularly advantageous when the control unit is a multi-layered PCB.

Patterns allow to improve heat dissipation locally (i.e., close to the patterned surface).

In embodiments, the external surface of the first rotor and/or the second rotor comprises a heat dissipating coating.

In embodiments where a flange or drum external to the first rotor and/or the second rotor is present, the flange or drum may comprise one or more of aerodynamic structures and/or the surface patterns and/or heat transfer structures described herein with reference to the external surface of the first rotor or second rotor.

Optionally, the electrical connection for transferring electrical power may comprise one or more of the following: a rotating contact with brushes; a contactless rotary transformer; a current transmitting bearing; a current transmitting brush.

Optionally, the electrical connection for transferring electrical information may comprise comprise one or more of the following: a rotating contact with brushes; a contactless rotary transformer; a current transmitting bearing; a current transmitting bush; a modulation of another electrical current, e.g. the electrical power transmission; a radio frequency transmission; an optic transmission.

The invention further relates to a vehicle comprising a vehicle drive system according to any one of the embodiments described herein.

In embodiments, the vehicle is a (at least partially) human-powered vehicle, e.g. at least in some operational modes.

The invention further relates to a method for cooling a vehicle drive system according to any one of the embodiments described herein. Although the method can be performed using the vehicle drive system according to the invention, neither the vehicle drive system, nor the method is limited thereto. Features explained herein with reference to the vehicle drive system have the same meaning with respect to the method unless explicitly defined otherwise. Features explained with reference to the vehicle drive system can be applied mutatis mutandis to the method to achieve the similar advantages, and vice versa.

The method is particularly adapted to cool a vehicle drive system wherein at least one of the first electric motor or the second electric motor (herein referred to as the "radially spaced motor") is an outrunner motor spaced in the radial direction from an inner surface of the housing, and wherein a first fluid space is present between the rotor of the radially spaced motor, the inner surface of the housing and the control unit.

This method comprises a step of rotating the rotor of the radially spaced motor to direct an air flow from the rotor extremity facing away from the control unit to the rotor extremity facing the control unit.

The invention further relates to a method for cooling a vehicle drive system according to any one of the embodiments described herein, wherein at least one of the first electric motor or the second electric motor (herein referred to as the "longitudinally spaced electric motor") is spaced in the longitudinal direction from the control unit, and wherein a second air space is present between the first electric motor and the control unit, and/or between the second electric motor and the control unit.

This method comprises a step of rotating the longitudinally spaced electric motor to direct an air flow from a radial outer region of the control unit towards a radial inner region of the control unit.

### Description of the figures

Exemplary embodiments of the invention are described using the figures. It is to be understood that these figures merely serve as examples of how the invention can be implemented and are in no way intended to be construed as limiting for the scope of the invention and the claims. Like features are indicated by like reference numerals along the figures. In the figures:
Fig 1 is a schematic view of a vehicle;
Fig 2 is a schematic view of a radial cross section of the vehicle drive system;
Fig 3a is a schematic view of a radial cross section of the vehicle drive system according to a first example;
Fig 3b is a schematic view of a radial cross section of the vehicle drive system according to a second example;
Fig 3c is a schematic view of a radial cross section of the vehicle drive system according to a third example;
Fig 4 is a schematic magnified view of a top part of the vehicle drive system of fig. 2.

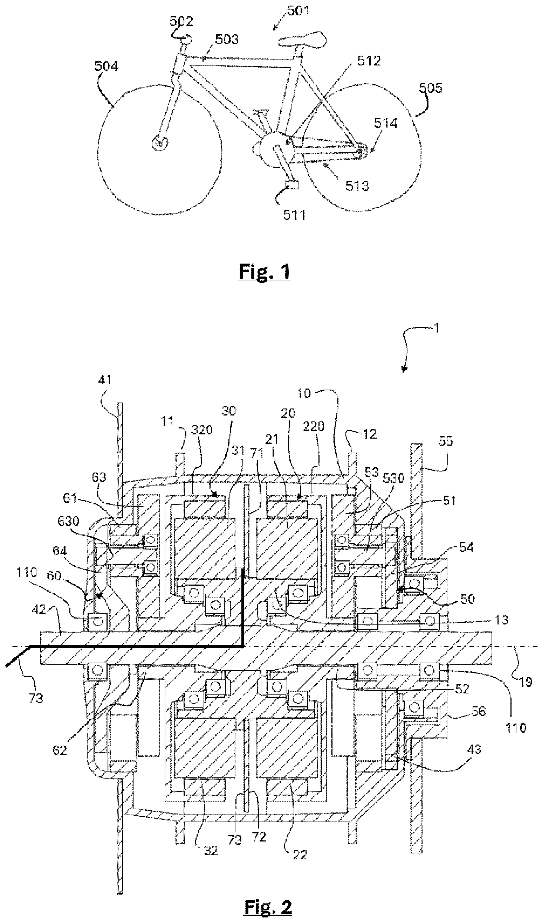

As can be seen on fig. 1, the vehicle drive system 1 is intended to be mounted on a vehicle for propelling said vehicle.

Fig. 1 schematically illustrates a vehicle 501, which in this example is a bicycle 501. The bicycle 501 has a handlebar 502, a frame 503, a front wheel 504, and a rear wheel 505. A user of the bicycle 501 can move the pedals 511 using the feet, which will rotate a crankshaft 512 to set a chain 513 in motion. The chain 513 is functionally connected to a vehicle drive system at a hub 514 of the rear wheel 505. The drive unit converts the motion of the chain 513 into the motion of the rear wheel 505 to propel the bicycle 501.

In the illustrated embodiment, the vehicle drive system 1 is arranged near the crankshaft of the bicycle (mid-drive bicycle).

However, the vehicle drive system can also be arranged at the real wheel of the bicycle. In this case, a housing of the vehicle drive system 1 may be the wheel hub of the bicycle (hub-drive bicycle).

Fig. 2 schematically illustrates an example of how the vehicle drive system 1 can be implemented in a bicycle. Fig. 2 schematically illustrates the vehicle drive system 1 in cross-section, showing a longitudinal axis 19 of the vehicle drive system 1. The longitudinal axis 19 of the vehicle drive system extends in a lateral direction of the bicycle, and thus perpendicular to the longitudinal axis of the bicycle. Optionally, the longitudinal axis 19 coincides with a rotation axis, e.g. a central axis, of the rear wheel.

In the example of Fig. 2, the vehicle drive system comprises a housing 10, which is substantially symmetrical about the longitudinal axis 19 and mounted on a shaft 42 by means of bearings 110. The shaft 42 can be fixed to a bicycle frame. The housing may be a multi-part housing, made of two or more parts assembled together.

Additional bearings can be present in the vehicle drive system, but for the sake of clarity, the reference numeral 110 is not repeated for all of them in the figures. Nevertheless, the additional bearings are depicted similarly as bearing 110.

The vehicle drive system 1 comprises a first electric motor 20 and a second electric motor 30 coaxially arranged inside the housing 10. In the shown example, the housing 10 is a wheel hub of the vehicle. The first electric motor 20 comprises a first stator 21, and a first rotor 22. The second electric motor 30 comprises a second stator 31, and a second rotor 32.

Each of the first stator 21 and the second stator 31 comprise a core with coils (not shown) wound around the core. The coils are connected to each other to form winding phases of the first electric motor 20 and second electric motor 30.

In the shown example, the first stator 21 and the second stator 31 are mounted around the shaft 42 via a support part 13. The first rotor 22 and the second rotor 32 are arranged in the housing 10 radially outward of the respective first stator 21 and the second stator 31 (i.e., they are outrunner type motors), and are rotatably mounted around the shaft 42. However, the first and second electric motors 20, 30 may be of different type (e.g., inrunner type motors, axial flux type motors, slotless type motors).

Each of the first rotor 22 and second rotor 32 comprises a main body, provided with permanent magnets (not shown), and a drum 220, 320. The rotor magnets face and interact with the coils of the respective stator, to rotate the first and second rotor 32 in a known manner.

The drum 220 of the first rotor 22 (also called first drum) and the drum 320 of the second rotor 32 (also called second drum) are respectively fixed to a first sun gear 52 and a second sun gear 62, which will be described in greater detail below.

Although not shown in this example, it is envisaged that the first drum 220 and the second drum 320 may be provided with holes drilled in their external surface. The holes can be drilled at an inclination relative to the radial or longitudinal direction.

For example, holes can be drilled on the external surface of the drum 220 that faces the inner surface 104 of the housing and/or on the external surface of the drum 220 that faces the planet gears 53.The vehicle drive system 1 comprises a transmission system which is configured to combine rotation of the first motor 20 and/or rotation of the second motor 30 to rotate the wheel of the vehicle to propel the vehicle. In addition, the transmission system can receive a human force input and use this as well for propelling the vehicle. It may in particular be advantageous to use the first and second motors 20, 30 to implement a continuously variable transmission having an adaptable gear ratio between an input speed provided by the human force input and a wheel rotation speed.

In the shown example, the continuously variable transmission comprises a differential system implemented as a first epicyclic gear system 50, and a reduction system implemented as a second epicyclic gear system 60. However, different types of gear systems can be used for the differential system and the reduction system, and the differential system and reduction system do not need to be implemented as the same type of gear system.

The first and second epicyclic gear system 50, 60 are arranged coaxial with each other, both having the longitudinal axis 19 as the common centre axis. The first and second epicyclic gear system 50, 60 each comprise a respective sun gear 52, 62, a respective ring gear 51, 61, respective planet gears 53, 63, and a respective planet carrier 54, 64.

The transmissions system comprises an input body 56, which is connected to an input sprocket 55. The input sprocket 55 comprises teeth (not shown) on which a chain (not shown) is arranged, although other embodiments (e.g. using a belt) are possible as well. The chain is an endless chain which is also arranged on a crank sprocket at the crankshaft of the bicycle. When a user of the bicycle moves the pedals and thereby the crank, the crank sprocket will rotate. This in turn causes the chain to move, and thereby rotate the input sprocket 55 and consequently the input body 56. The input body 56 rotates at an input speed. It will be understood that other implementations for rotating the input body 56 are possible, in particular when the drive unit 1 is used for a vehicle other than a bicycle.

The input body 56 is directly connected to the planet carrier 54 of the first epicyclic gear system 50 (also called first planet carrier). However, the input body 56 can also be integral with the first planet carrier 54. The rotation of the input body 56 is transmitted to the first planet carrier 54. The rotation of the first planet carrier 54, in turn, drives the rotation the planet gears 53 of the first epicyclic gear system 50 (also called first planet gears) around their respective shafts 530.

In the shown example, a freewheel 43 is arranged between the first planet carrier 54 and the housing 10, coaxially with the first planet carrier 54. This arrangement of the freewheel enables the planet carrier to transmit rotational motion to the housing in the driving direction during normal operation of the bicycle. Therefore, in this case the rotational speed of the housing is equal or greater than the rotational speed of the input body 56 when the input body 56 rotates in the normal direction of operation.

The first planet gears 53 are meshed to the sun gear 52 of the first epicyclic gear system 50 (also called first sun gear) and to the ring gear 51 of the first epicyclic gear system 50 (also called first ring gear). The first ring gear 51 is fixed to an inner surface of the housing 10. The first sun gear 52 is mounted on a support part 13 via bearing 110 and connected to the first rotor 22, for example it can be connected to or integral with a rotor drum 220 (in this case, the rotor drum 220 also acts as a gear of the first epicyclic gear system 50).

In this example, the housing 10 is the final link of the kinematic chain and is configured to transmit rotational motion from the transmission system directly to a wheel of the vehicle.

The second epicyclic gear system 60 comprises a second sun gear 62 mounted on the support part 13 via bearings 110 and connected to a drum 320 of the second rotor 30. The second epicyclic gear system 60 further comprises planet gears 63 that are meshed to the second sun gear 62 and to the ring gear 61 of the second epicyclic gear system 60. These planet gears 63 are rotatably mounted around respective shafts 630, the shafts 630 being connected to the second planet carrier 64.

Fig. 2 further illustrates a brake disc 41 which is arranged outside of the housing 10 but attached to the housing 10. The brake disc 41 will thus rotate at the housing speed. The vehicle comprises a brake system that can be applied by the user, which will engage the brake disc 41 to slow down the vehicle by reducing the housing rotation speed (and thus wheel rotation speed).

The vehicle drive system 1 further comprises a control unit 71 arranged inside the housing 10. The control unit can e.g. be a board, e.g. a PCB. In the example shown in fig. 2 the control unit 71 has an annular shape, and is mounted around the central shaft 42 by means of the support part 13. The longitudinal axis 19 forms a centre axis of the control unit 71. The support part 13 comprises a protrusion for holding the control unit 71, e.g. by interlocking. In addition to its function of control unit holder, the protrusion also acts as spacer between the control unit 71 and the first electric motor, aiding in thermal management.

The control unit 71 can e.g. comprise several PCBs. Each PCB may serve different functions, e.g. one PCB serve for transfer and/or processing of information, another for supplying power, and the like. These PCBs may be connected via wires, connectors, or other means.

The control unit 71 can e.g. comprise a multi-layered PCB made of multiple layers of circuitry stacked together and connected through each other by electrical connections through the layers.

In the shown example, a cable 73 is routed via the shaft 42 (e.g. the shaft 42 is hollow and comprise a conduit through which the cable is routed) towards the control unit 71.

In the shown example, the first and second electric motors 20, 30 are symmetrically arranged with respect to the control unit 71 and have the same diameter. However, the first and second electric motors 20, 30 may have different diameters and/or may be arranged non-symmetrically with respect to the control unit 71 (e.g., both motors can be arranged on the same side of the control unit 71 when seen in the longitudinal direction).

The control unit 71 is configured to control the first and second electric motors 20, 30. For example, controlling the first and second electric motors 20, 30 may comprise: control the electromagnetic fields generated by the first and second stators 21, 31; control the rotation speed of the first and second electric motors 20, 30; control a gear ratio between the input body 56 and the wheel rotation speed; control the parameters of an electric current (or voltage) to be supplied to the first and second electric motors 20, 30 (e.g. timing, duration, and waveform of electric current).

The control unit may be configured to control the first and second electric motors 20, 30 based on target rotational speeds and/or target torques; and/or based on measured angular positions and/or measured rotational speed of the first and second electric motors 20, 30. The control unit may also be configured to control the first and second electric motors 20, 30 based on inputs from user-controlled elements (e.g., brakes) or from sensors.

The control unit 71 is arranged inside the housing coaxially with the first and second motor20, 30. This may be advantageous as it allows a short connection towards both motors 20, 30, while controlling both motors from a single control unit 71 with in particular a single board.

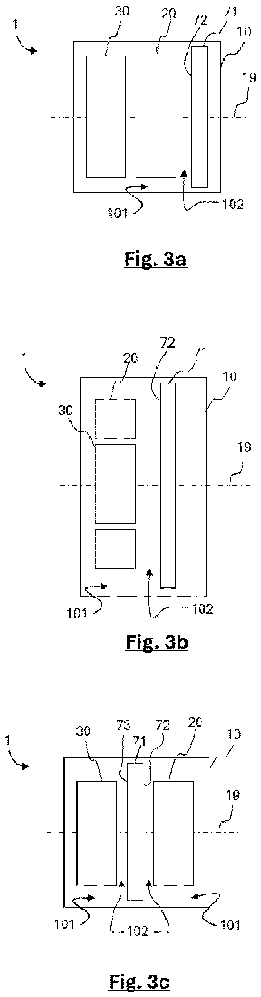

Figs. 3a-3c illustrate three exemplary arrangements of the control unit 71 inside the housing 10. In these embodiments, the control unit 71 comprises at least one surface 72, 73 facing at least one of the first electric motor 20 and second electric motor 30 (i.e., the control unit 71 is adjacent to at least one electric motor 20, 30).

In the exemplary embodiment of fig. 3a, the control unit 71, the first electric motor 20 and the second electric motor 30 are sequentially and coaxially arranged along the longitudinal direction 19 and the first electric motor 20 is arranged between the first control unit 71 and the second electric motor 30 along the longitudinal direction 19. The control unit 71 has a first surface 72 that faces the first electric motor 20.

In the exemplary embodiment of fig. 3b, the first electric motor 20 and the second electric motor 30 are coaxially arranged along the longitudinal direction 19 (with the first electric motor 20 arranged radially outward of the second electric motor 30), and the control unit 71 is arranged adjacent to the first and second electric motors 20, 30 along the longitudinal direction 19. The control unit 71 has a first surface 72 that faces both the first electric motor 20 and the second electric motor 30.

In the exemplary embodiment of fig. 3c, the control unit 71, the first electric motor 20 and the second electric motor 30 are sequentially and coaxially arranged along the longitudinal direction 19 and the control unit 71 is arranged between the first electric motor 20 and the second electric motor 30. In the shown example, the first electric motor 20, the control unit 71, and the second electric motor 30 are adjacent to each other. The control unit 71 has a first surface 72 that faces the first electric motor 20 and a second surface 73 that faces the second electric motor 30.

Having a control unit 71 that at least partially faces both the first electric motor 20 and the second electric motor 30 (whether it is via the same first surface 72, or via a first surface 72 and a second surface 73, respectively) allows to simplify the implementation of the control of both electric motors (e.g., simplify the connections of winding phases, the integration of sensors, the electrical connections between the control unit and the electric motors).

Regardless of the arrangement of the control unit with respect to the first and second electric motors 20, 30 (e.g., upstream or downstream of both motors 20, 30, or in between the motors 20, 30), a fluid space 101, 102 may be present in proximity of the control unit 71. The fluid space 101, 102 allows to cool the most heat sensitive components of the vehicle drive system, such as the control unit 71, through forced air convection.

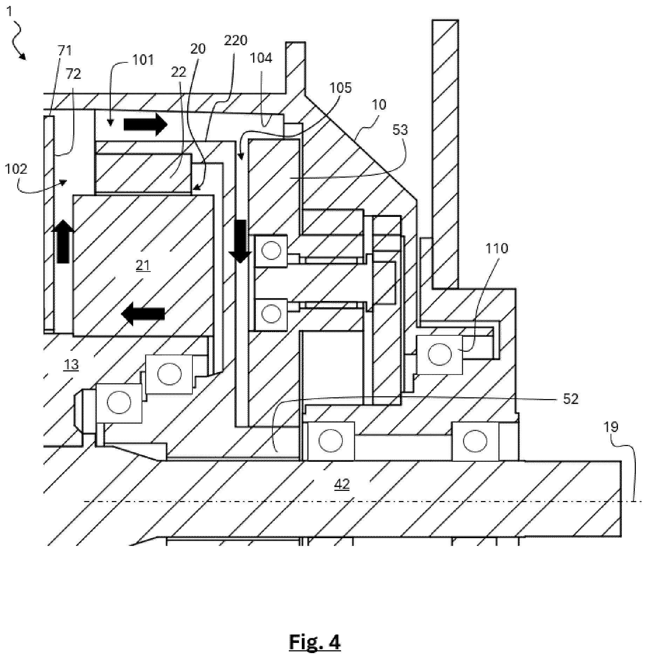

Fig. 4 shows the circulation of air in the fluid space 101, 102 in the exemplary arrangements of fig. 2 and fig. 3a, i.e., when the control unit 71 is arranged between the motors 20, 30. However, it should be understood a similar fluid flow may be present in the other arrangements of the control unit 71 herein described.

In the shown example, the first electric motor 20 is an outrunner motor type. The first rotor 22 is spaced in the radial direction from an inner surface 104 of the housing 10, and a first fluid space 101 is present between the first rotor 22, the inner surface of the housing and the control unit 71.

The rotation of the first rotor 22 generates a fluid flow in the first fluid space 101. The heat generated at the first rotor 22 is transferred to the the air in the first fluid space 101 and to the housing 10 and can be discharged to the environment through the housing 10.

As indicated by the arrows in fig. 4, the fluid can e.g. circulate in the first fluid space 101 away from the control unit 71. The fluid flow direction can be controlled based on the direction of rotation of the first rotor 22 and/or via aerodynamic structures.

For example, the drum 220 of the first rotor 22 may comprise aerodynamic structures (not shown) such as fans or fins radially extending from the external surface of the first rotor 22. These structures allow to force the fluid flow towards or away from the control unit 71 and/or to improve cooling of the first rotor 22 by increasing the surface available for thermal exchange with air in the first fluid space 101. Similar structures may also be provided on the inner surface 104 of the housing 10. The external surface of the first rotor 22 and/or the drum 220 of the first rotor 22 may comprise a coating or a pattern to improve heat dissipation locally, i.e. in proximity of the external rotor surface.

The second rotor (not shown in fig. 4) may also be spaced in the radial direction from the inner surface 104 of the housing 10. In this case, a similar fluid flow is present in the first fluid space 101 present between the second rotor 32 (or the second drum 320), the inner surface 104 of the housing 10 and the control unit 71.

In fig. 4, the first electric motor 20 is spaced in the axial direction from the control unit 71, and a second fluid space 102 is present between the first electric motor 20 and the control unit 71. Air further circulates in the second fluid space 102 from the radial inner region of the control unit 71 toward the radial outer region of the control unit 71.

The fluid flow in the first and second fluid spaces 101, 102 allows to cool the control unit 71 and/or the first stator 21, thus reducing the risk of heat damage.

The second electric motor 30 (not shown in fig. 4) may also be spaced in the axial direction from the control unit 71, and a second fluid space may be present between the second electric motor 30 and the control unit 71. In this case, the fluid flow in the second fluid space between the second electric motor 30 and the control unit 71 mirrors the fluid flow between the second electric motor 30 and the control unit 71 and both the first and second surfaces 72, 73 of the control unit 71 can be cooled down.

In fig. 4, a third fluid space 105 is present between the first electric motor 20 and the first epicyclic gear system 50, specifically between the first drum 220 and the first planet gear 53. The fluid flow in third fluid space 105 allows to cool the first epicyclic gear system 50. A similar third fluid space may be provided between the second electric motor 30 and the second epicyclic gear system 60 (not shown in fig. 4).

As indicated by the arrows in fig. 4, the air can circulate in the third fluid space 105 from the radial outer region of the drum 220 towards the first sun gear 52.

As indicated by the arrows in fig. 4, the air can circulate again towards the radial inner region of the control unit 71 through holes (not shown) in the first stator 21. Given that the stator is a significant source of heat within the vehicle drive system 1, this segment of the fluid flow mitigates the risk of overheating by transferring thermal energy away from the stator.

The air, heated from the first stator 21, is subsequently directed back toward the first rotor 22, where it reintegrates with the fluid flow in the first fluid space 101, where air transfers heat to the housing 10, which in turn dissipates the heat to the external environment. This provides a continuous thermal exchange cycle, ensuring efficient heat transfer and cooling of components such as the control unit 71. Although not shown in this example, it is envisaged that the housing 10 may be provided with elements for improving the heat transfer to the ambient air. Such elements can e.g. include cooling fins protruding from the hub housing 10, e.g. (at least partially) radially outward.

In the shown example, the first fluid space 101, the second fluid space 102, the third fluid space 105, and the holes in the first stator 21 form a fluid circulation system where a fluid like air can circulate as schematically illustrated by the clockwise series of arrows in Fig. 4.

In other examples (not shown), the fluid flow may circulate in the direction opposite to that indicated by the arrows in Fig. 4.

This first fluid circulation system allows to dissipate heat generated by the first electric motor 20. A second fluid circulation system mirroring the first fluid circulation system (i.e., having the opposite flow direction), may be provided to dissipate heat generated by the second electric motor 30. In this case, the description provided herein for the first fluid circulation system applies to the second fluid circulation system and is not repeated for the sake of brevity.

Each of the external surface of the drum 220, the holes in the stator 21, and the inner surface 104 of the housing may comprise aerodynamic structures, and/or may be patterned. These structures and/or patterns allow to control the fluid flow in the first circulation system and, when present, in the second circulation system.

As required, detailed embodiments of the present invention are described herein; however, it is to be understood that the disclosed embodiments are merely examples of the invention, which may be embodied in various ways. Therefore, specific structural and functional details disclosed herein are not to be construed as limiting, but merely as a basis for the claims and as a representative basis for teaching those skilled in the art to practice the present invention in various ways in virtually any suitable detailed structure. Not all of the objectives described need be achieved with particular embodiments.

Furthermore, the terms and expressions used herein are not intended to limit the invention, but to provide an understandable description of the invention. The words "a", "an", or "one" used herein mean one or more than one, unless otherwise indicated. The terms "a multiple of", "a plurality" or "several" mean two or more than two. The words "comprise", "include", "contain" and "have" have an open meaning and do not exclude the presence of additional elements. Reference numerals in the claims should not be construed as limiting the invention.

The mere fact that certain technical features are described in different dependent claims still allows the possibility that a combination of these technical measures can be used advantageously.

A single processor or other unit can perform the functions of various components mentioned in the description and claims, e.g. of processing units or control units, or the functionality of a single processing unit or control unit described herein can in practice be distributed over multiple components, optionally physically separated of each other. Any communication between components can be wired or wireless by known methods.

The actions performed by the control unit can be implemented as a program, for example computer program, software application, or the like. The program can be executed using computer readable instructions. The program may include a subroutine, a function, a procedure, an object method, an object implementation, an executable application, a source code, an object code, a shared library / dynamic load library and / or other set of instructions designed for execution on a computer system.

A computer program or computer-readable instructions can be stored and / or distributed on a suitable medium, such as an optical storage medium or a solid-state medium supplied with or as part of other hardware, but can also be distributed in other forms, such as via internet or other wired or wireless telecommunication systems.

## Claims

1. A vehicle drive system (1) comprising:
• a housing (10);
• a continuously variable transmission system;
• a first electric motor (20) connected to the continuously variable transmission system and a second electric motor (30) connected to the continuously variable transmission system, the first electric motor (20) and the second electric motor (30) being arranged coaxially; and
• at least a first control unit (71) for controlling the first electric motor (20) and the second electric motor (30);
wherein the first control unit (71), the first electric motor (20), and the second electric motor (30) are arranged inside the housing (10).

2. The vehicle drive system (1) according to claim 1, wherein the first control unit (71) is configured to control both the first electric motor (20) and the second electric motor (30), preferably the first control unit (71) being a control board.

3. The vehicle drive system (1) according to claim 1 or claim 2, further comprising a second control unit arranged inside the housing (10), wherein the first control unit (71) is configured to control the first electric motor (20), and the second control unit is configured to control the second electric motor (30), preferably the first control unit (71) and the second control unit being control boards.

4. The vehicle drive system (1) according to any one of the preceding claims, wherein each of the first electric motor (20) and the second electric motor (30) comprises coils connected with each other to form winding phases, the winding phases being connected with each other via connections that are at least partially located on a circuit board of the first control unit (71) and/or the second control unit.

5. The vehicle drive system (1) according to any one of the preceding claims, wherein the first control unit (71) is arranged between the first electric motor (20) and the second electric motor (30) when seen in their longitudinal direction.

6. The vehicle drive system (1) according to any one of the preceding claims, wherein the first electric motor (20) and the second electric motor (30) are arranged essentially symmetrically with respect to the first control unit (71), wherein the first electric motor (20) comprises a first rotor (22) and a first stator (21) and the second electric motor (30) comprises a second rotor (32) and a second stator (31), and wherein the first rotor (22) and the second rotor (32) and/or the first stator (21) and the second stator (31):
• have the same diameter; and/or
• have the same length; and/or
• have the same cross-section; and/or
• are both made of a stack of laminations, preferably by a stack of stamped iron laminations.

7. The vehicle drive system (1) according to any one of the preceding claims, wherein the first electric motor (20) is arranged radially outward of the second electric motor (30) or the second electric motor (30) is arranged radially outward of the first electric motor (20).

8. The vehicle drive system (1) according to any one of the preceding claims, further comprising at least one sensor arranged on the first control unit (71) for determining an angular position of the first electric motor (20); an angular position of the second electric motor (30); a rotation speed of the first electric motor (20); and/or a rotation speed of the second electric motor (30).

9. The vehicle drive system (1) according to any one of the preceding claims, further comprising at least one sensor arranged on the first control unit (71) for determining an angular position and/or a rotation speed of the housing (10).

10. The vehicle drive system (1) according to any one of the preceding claims, wherein the first electric motor (20) and/or the second electric motor (30) is a permanent magnets synchronous motor.

11. The vehicle drive system (1) according to any one of the preceding claims, wherein each of the first electric motor (20) and the second electric motor (30) comprises a rotor (22, 32) and a stator (21, 31), wherein each rotor (22, 32) is arranged radially outward of the respective stator (21, 31).

12. The vehicle drive system (1) according to any of the preceding claims, wherein the vehicle drive system further comprises fluid spaces (101, 102) configured to guide a fluid flow between the first electric motor (20) and/or the second electric motor (30) and the housing (10), and between the first electric motor (20) and/or the second electric motor (30) and the control unit (71); the fluid spaces (101, 102) being in fluid communication thereby providing a fluid circulation system within the vehicle drive system (1).

13. The vehicle drive system (1) according to claim 11 or according to claim 12 when depending on claim 11, wherein the fluid spaces of the fluid circulation system comprise:
• a first fluid space (101) between the first rotor (22), an inner surface (104) of the housing (10) and the first control unit (71), and/or between the second rotor (32), the inner surface (104) of the housing (10) and the first control unit (71);
• a second fluid space (102) between the first electric motor (20) and the control unit (71) and/or between the second electric motor (30) and the control unit (71);
• a third fluid space (105) between the first electric motor (20) and the continuously variable transmission system, and/or between the second electric motor (30) and the continuously variable transmission system; and
• a fourth fluid space in the first stator (21) and/or in the second stator (31).

14. The vehicle drive system (1) according to claim 11, or according to claim 12 or claim 13 when depending on claim 11, wherein the vehicle drive system (1) comprises at least one rotating surface facing at least one of the fluid spaces, wherein the rotating surface is configured to rotate along with the first rotor (22) and/or the second rotor (32) during use, wherein the rotating surface comprises aerodynamic structures and/or the rotating surface is patterned.

15. A vehicle, preferably a muscle-powered vehicle, comprising a vehicle drive system (1) according to any one of the preceding claims.
